# EUROPEAN PATENT SPECIFICATION

(11) **EP 3 765 677 B1**
(45) Date of publication and mention of the grant of the patent: **29.12.2021**
(21) Application number: 19708030.2
(22) Date of filing: 18.02.2019
(51) Int. Cl.: E01H 1/04

(54) **MATERIAL COLLECTION EQUIPMENT**
MATERIALSAMMLUNGSAUSRÜSTUNG
ÉQUIPEMENT DE COLLECTE DE MATÉRIEL

(30) Priority: 16.03.2018 DE 102018002141
(43) Date of publication of application: 20.01.2021
(73) Proprietor: Husqvarna AB, 56182 Huskvarna (SE)
(72) Inventor: KOHL, Peter, 89257 Illertissen (DE)
(74) Representative: Finkele, Rolf
(86) International application number: PCT/EP2019/053999
(87) International publication number: WO 2019/174863

(56) References cited:
- US-A- 283 415
- US-A- 604 812
- US-A1- 2006 070 194

## Description

### TECHNICAL FIELD

The present disclosure relates to a material collection equipment, and more particularly to a structural aspect of the material collection equipment.

### BACKGROUND

Generally, a material collection equipment, such as a walk-behind leaves collector, may include a rotating brush provided within an enclosure. As the equipment may move over a ground surface, the rotating brush may rotate and contact the ground surface. When the rotating brush contacts and moves over leaves present on the ground surface, the rotating brush may collect the leaves and transfer the collected leaves to an adjacently located storage compartment.

However, in many situations, the rotating brush may include straight profiled blades and/or bristles. Such straight profiled blades and/or bristles provide a substantial resistance while moving over the ground surface, in turn, making the collection process labor and time intensive. Also, due to the straight profiled blades and/or bristles, an overall area present within the enclosure and/or around the rotating brush may be inefficiently utilized, in turn, reducing productivity and material collectability of the equipment. Hence, there is a need for an improved profile of such rotating brushes employed in the equipment.

**The patent** US 604 812 **describes a material collection equipment that has a work implement comprising of rotating, cylindrically oriented brushes that exhibit a helically shape along its extent along the axle of equipments wheels.**

**The same kind of equipment is described with the patent application** US 2006 0 070 194 A1 **whereas here the brushes employed are straight in shape on the axle but are divided into two halves adjacent but a angularly offset to each other.**

**The rotating, cylindrically oriented brushes with the material collection equipment of** US 283 415 **are straight but exhibit a double configuration. That is that each of the brushes blades is formed as a first blade and a second blade being angular offset to each other.**

### SUMMARY

In view of the above, it is an objective of the present invention to solve or at least reduce the drawbacks discussed above. The objective is at least partially achieved by a material collection equipment, according claim 1. In the context of this application the leading edge of a blade is defined by the situation that when the material collection equipment is moved over the ground to collect objects on it the leading edge of a blade touches the ground surface (or object on the ground surface) before the trailing edge of this blade.

As it is the leading edge of each of the blades being disposed proximal to corresponding ends of the axle any movable object will first be touched by the blade's leading edge that is located proximal towards the corresponding end of the axle and thus will be push inwards into the implement compartment. This will further improve the collection ability of the equipment as the accidental pushout of object is avoided as well as object just partly hit in the first place might be properly collected after their push inwards into the implement compartment. In case, outside the scope of the claims, the arrangement of blades may be opposite, that is the trailing edge of each of the blades is disposed proximal to corresponding ends of the axle the objects on the surface will be pushed towards the outer sides of the implement compartment. In this situation a suitable structural or air-stream design of the implement compartment might assist to collect the so pushed objects.

In an advantageous manner in addition the specific arrangement of the blades having a leading edge and a trailing edge have the effect that not the complete edge of the blade touches the ground at the same time. Thus this arrangement results in a relatively lower resistance while moving over the ground surface during collection of the material from the ground surface, in turn, providing improved efficiency.

According to an embodiment of the present invention, the at least one pair of blades has a Y-shaped configuration. The Y-shaped configuration provides a relatively more aggressive sweeping force.

According to an embodiment of the present invention, each of the first blade and the second blade from the at least one pair of blades define a substantially double helical configuration. As such, the double helical configuration provides a relatively larger surface area in order to collect the material from the ground surface, in turn, providing improved productivity. Also, the double helical configuration provides a relatively lower resistance while moving over the ground surface during collection of the material from the ground surface, in turn, providing improved efficiency.

According to an embodiment of the present invention, each of the first blade and the second blade from the at least one pair of blades define a substantially flat and planar configuration. As such, the flat and planar configuration provides a relatively larger surface area in order to collect the material from the ground surface, in turn, providing improved productivity. Also, the flat and planar configuration provides a relatively lower resistance while moving over the ground surface during collection of the material from the ground surface, in turn, providing improved efficiency.

According to an embodiment of the present invention, each of the first blade and the second blade from the at least one pair of blades define a substantially curved configuration. As such, curved configuration provides a relatively larger surface area in order to collect the material from the ground surface, in turn, providing improved productivity. Also, the curved configuration provides a relatively lower resistance while moving over the ground surface during collection of the material from the ground surface, in turn, providing improved efficiency.

According to an embodiment of the present invention, each of the first blade and the second blade from the at least one pair of blades define a substantially angled configuration. As such, the angled configuration provides a relatively larger surface area in order to collect the material from the ground surface, in turn, providing improved productivity. Also, the angled configuration provides a relatively lower resistance while moving over the ground surface during collection of the material from the ground surface, in turn, providing improved efficiency.

According to an embodiment of the present invention, the implement further includes a coupling member coupled to the axle and extending radially away from the axle. As such, the coupling member is adapted to be coupled to the at least one pair of blades. The coupling member provides a simple and effective method to couple the at least one pair of blades with the axle, in turn, providing improved usability, simplified installation, reduced labor, and the like.

According to an embodiment of the present invention, the coupling member in association with the at least one pair of blades forms a substantially Y-Shaped configuration. As such, the Y-shaped configuration provides a relatively more aggressive sweeping force by a leading blade from one of the first and second blades of the at least one pair of blades in order to lift the material from the ground surface. Additionally, the Y-shaped configuration provides a drifting or pushing force to the lifted material by a trailing blade of the at least one pair of blades in order to transfer the material into the storage compartment.

According to an embodiment of the present invention, each of the first blade and the second blade includes a first portion and a second portion coupled to the first portion. As such, each of the first portion and the second portion provides a variable structural, constructional, and/or operational configuration to each of the first blade and the second blade.

According to an embodiment of the present invention, the second portion includes a bristled configuration. As such, the bristle configuration provides a flexible end surface to each of the first blade and the second blade in order to provide improved sweeping action, improved material collectability, improved productivity, reduced damage to the ground surface, and the like.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a material collection equipment, in accordance with an embodiment of the present invention;
**FIG. 2** shows an enlarged perspective view of a portion of the material collection equipment, in accordance with an embodiment of the present invention;
**FIG. 3** shows a perspective view of a work implement of the material collection equipment, in accordance with an embodiment of the present invention;
**FIG. 4** shows a side view of another non-claimed work implement of the material collection equipment;
**FIG. 5** shows a perspective view of another work implement of the material collection equipment, in accordance with another embodiment of the present invention;
**FIG. 6** shows a perspective view of another work implement of the material collection equipment, in accordance with another embodiment of the present invention; and
**FIG. 7** shows a perspective view of another work implement of the material collection equipment, in accordance with another embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "parallel", "inclined", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

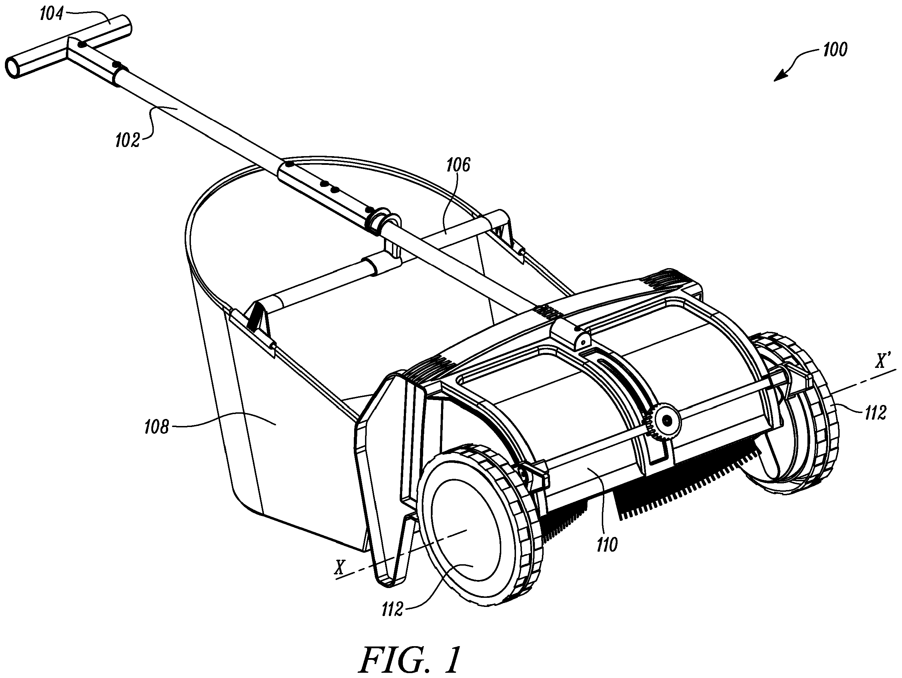

Referring to **FIG. 1**, a perspective view of a material collection equipment **100** is illustrated. The material collection equipment **100** will be hereinafter interchangeably referred to as the "equipment **100**"**.** The equipment **100** is adapted to collect material (not shown) present on a ground surface and store the material therein. In one embodiment, the equipment **100** may be a walk-behind leaves collector adapted to collect leaves present on a lawn surface and store the leaves therein. In another embodiment, the equipment **100** may be a floor cleaner adapted to collect debris present on a floor surface and store the debris therein, and the like.

The equipment **100** includes a handle **102**. The handle **102** is adapted to provide a pushing force therethrough to the equipment **100** in order to propel the equipment **100** on the ground surface during a work operation. The handle **102** may be any handle known in the art, such as a fixed handle, a swivel handle, a pivot handle, a telescopic handle, and the like. The handle **102** also includes a gripping portion **104** coupled thereto. The gripping portion **104** is adapted to hold the handle **102** during the work operation. The handle **102** further includes a support portion **106** coupled thereto. The support portion **106** is adapted to support and/or couple the handle **102** with respect to the equipment **100**.

The equipment **100** includes a storage compartment **108**. In the illustrated embodiment, the support portion **106** is coupled to the storage compartment **108**. The storage compartment **108** includes a substantially hollow configuration. The storage compartment **108** is adapted to receive the material therein during the work operation. Additionally, the storage compartment **108** is adapted to temporarily store the material therein, based on application requirements. In some embodiments, the storage compartment **108** may include a cover portion (not shown) provided thereon. The cover portion may be adapted to provide an enclosure on the storage compartment **108**.

The equipment **100** includes an implement compartment **110**. The implement compartment **110** is disposed adjacent to and in association with the storage compartment **108**. The implement compartment **110** will be explained in more detail later. The equipment **100** also includes a pair of wheels **112**. Each of the pair of wheels **112** is movably coupled to the implement compartment **110**. Each of the pair of wheels **112** is adapted to support and propel the equipment **100** on the ground surface. Accordingly, each of the pair of wheels **112** is adapted to rotate about an axis **X-X'**, based on movement of the equipment **100** on the ground surface.

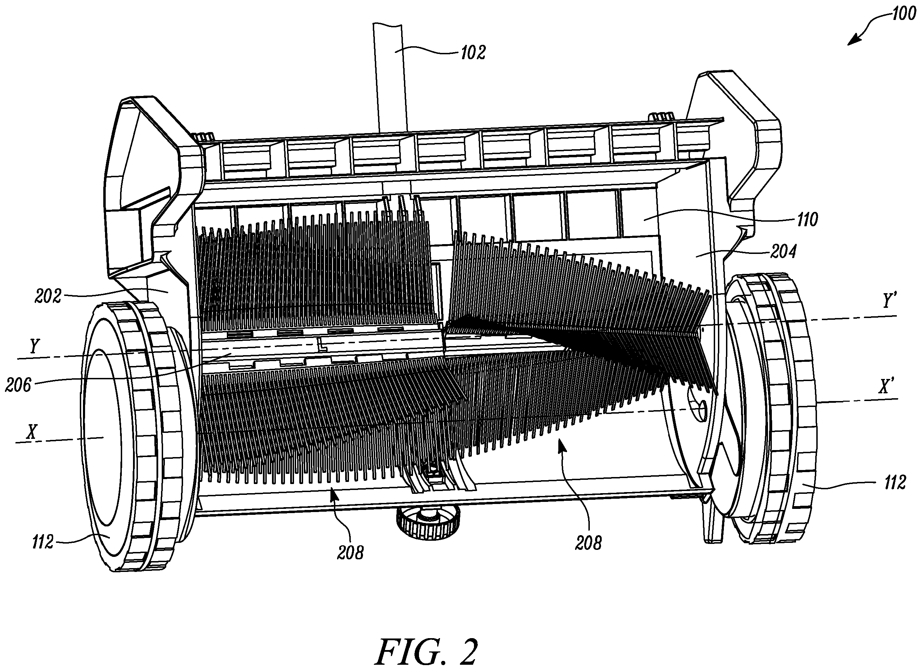

Referring to **FIG. 2**, a perspective view of the implement compartment **110** is illustrated. The implement compartment **110** includes a substantially hollow configuration. The implement compartment **110** includes a first side wall **202** and a second side wall **204**. The second side wall **204** is disposed opposite the first side wall **202**. The implement compartment **110** also includes an axle **206** disposed therein. The axle **206** is rotatably coupled to each of the first side wall **202** and the second side wall **204**. Further, the axle **206** is coupled to each of the pair of wheels **112**. Accordingly, based on a rotation of each of the pair of wheels **112**, the axle **206** is adapted to rotate about an axis **Y-Y'**.

In the illustrated embodiment, the axis **Y-Y'** is disposed at an offset with respect to the axis **X-X'**. Accordingly, the axle **206** is coupled to one or more of the pair of wheels **112** via a transmission mechanism (not shown). The transmission mechanism may be any power transfer mechanism, such as one or more gears, a belt pulley mechanism, contacting elements, and the like. In some embodiments, the axle **206** may be directly coupled to each of the pair of wheels **112**. In such a situation, the axis **X-X'** may axially align and coincide with respect to the axis **Y-Y'**.

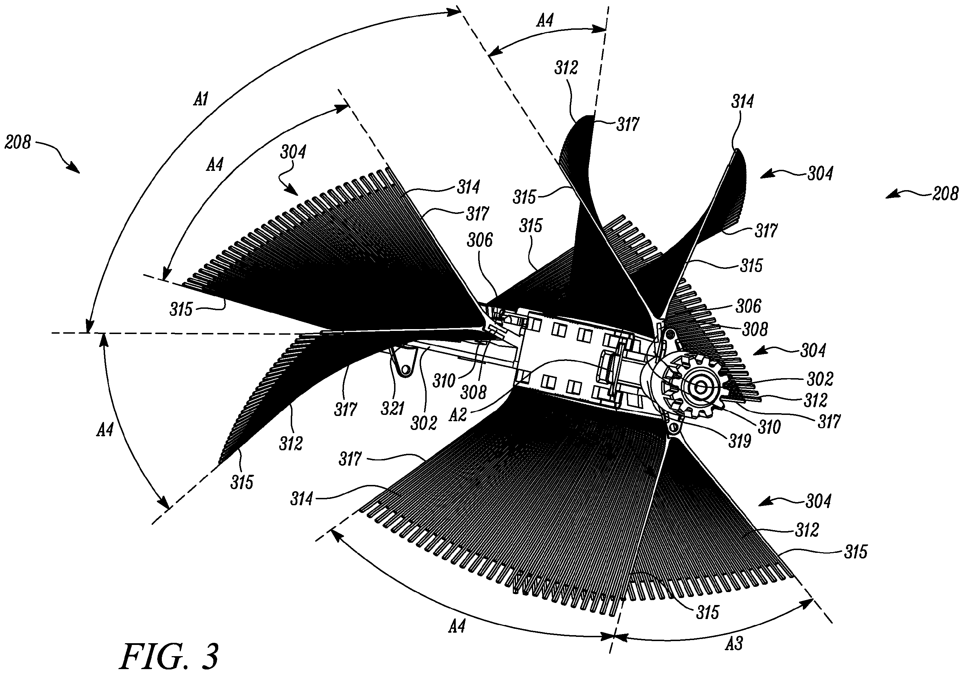

The equipment **100** further includes a work implement **208** disposed within the implement compartment **110**. In the illustrated embodiment, the equipment **100** includes two work implements **208** disposed within the implement compartment **110**. The work implement **208** is fixedly coupled to the axle **206**. Accordingly, the work implement **208** is adapted to rotate about the axis **Y-Y'**, based on the rotation of the axle **206**. The work implement **208** is adapted to collect the material from the ground surface and transfer the material into the storage compartment **108**. The work implement **208** will be explained in more detail with reference to **FIG. 3**.

Referring to **FIG. 3**, a perspective view of the work implement **208** is illustrated. In the illustrated embodiment, each of the two work implements **208** is disposed at an angular offset with respect to one another on the axle **206** defining an angle "**A1**". In other embodiments, each of the two work implements **208** may be angularly aligned with respect to one another on the axle **206**. Further, in other embodiments, the equipment **100** may include single or multiple work implements **208**, based on application requirements. The work implement **208** includes a coupling member **302**. The coupling member **302** is adapted to be coupled to the axle **206** and extends radially away therefrom. The coupling member **302** may be coupled to the axle **206** using any coupling mechanism known in the art. In one embodiment, the coupling member **302** may be coupled to the axle **206** using interlocking surfaces or tabs provided on each of the coupling member **302** and the axle **206**. In another embodiment, the coupling member **302** may be coupled to the axle **206** using one or more fasteners, such as one or more bolts, screws, clamps, clasps, pins, and the like.

The work implement **208** also includes at least one pair of blades **304** coupled to the coupling member **302**. In the illustrated embodiment, the work implement **208** includes two pair of blades **304** coupled to the coupling member **302**. Each of the two pair of blades **304** is disposed at an angular offset with respect to one another defining an angle "**A2**". In other embodiments, the work implement **208** may include a single or multiple pair of blades **304**, based on application requirements. Each of the pair of blades **304** is coupled to the coupling member **302** via a stem portion **306** provided thereon and a protrusion **308** provided on the coupling member **302**. More specifically, the protrusion **308** is received within a recess **310** provided in the stem portion **306** of the pair of blades **304** in order to couple each of the pair of blades **304** with the respective coupling member **302**. In other embodiments, one or more of the pair of blades **304** may be coupled to coupling member **302** using one or more fasteners, such as bolts, screws, clamps, clasps, pins, and the like, and/or any other coupling mechanism known in the art.

Each pair of blades **304** includes a first blade **312** and a second blade **314**. Each of the first blade **312** and the second blade **314** extends in a direction away from the coupling member **302** and the axle **206**. Also, in the illustrated embodiment, each of the first blade **312** and the second blade **314** is disposed in a side-by-side relation and adjacent with respect to one another. Further, each of the first blade **312** and the second blade **314** is disposed at an angular offset with respect to one another defining an angle "**A3**". In an embodiment, the at least one pair of blades **304** has a Y-shaped configuration.

As best shown in the view of **FIG. 3**, each blade from at least one of the first blades **312** and the second blades **314** from respective pairs of blades **304** includes a leading edge **315** and a trailing edge **317**. The leading edge **315** of each of the blades **312/314** is disposed proximal to a corresponding end **319/321** of the axle **206**. For instance, the leading edges **315** of respective ones of the blades **312/314** located on a right-hand side of **FIG. 3** are disposed proximal to a right-side end **319** of the axle **206**. Similarly, the leading edges **315** of respective ones of the blades **312/314** located on a left-hand side of **FIG. 3** are disposed proximal to a left-side end **321** of the axle **206**. Moreover, as shown, the leading edge **315** of the blade **312/314** precedes the trailing edge of the same blade **312/314** by an angle "**A4**".

Further, in the illustrated embodiment of **FIGS. 2** and **3**, each of the first blade **312** and the second blade **314** includes a substantially perforated configuration. However, in other embodiments, one or more of the first blade **312** and the second blade **314** may include a substantially non-perforated or partially perforated configuration. Also, in the accompanying **FIGS. 2** and **3**, each of the pair of blades **304** includes a substantially double helical configuration. Also, with continued reference to **FIG. 3**, the first blade **312** and the second blade **314** are provided at a lateral offset to each other. Due to the lateral offset, during the sweeping motion of the pair of blades **304**, better coverage of the ground surface is provided. Spaces left to be swept between cutting edges of the first blade **312** are swept by cutting edges of the second blade **314** which follows the sweeping motion of the first blade **312**.

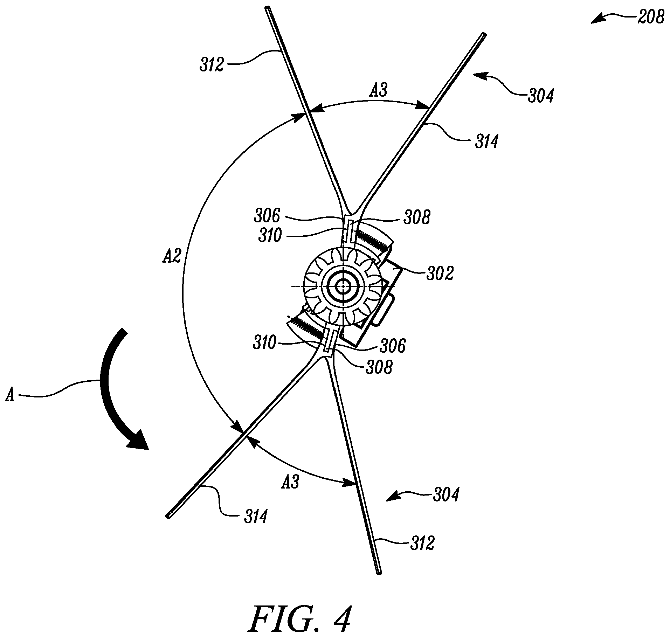

Referring to **FIG. 4**, a side view of a configuration of the work implement **208** that is outside of the scope of the claims is illustrated. In the illustrated embodiment, each of the first blade **312** and the second blade **314** is disposed at the angle "**A3**" with respect to one another. Also, each of the first blade **312** and the second blade **314** includes a substantially flat and planar configuration. Further, each of the first blade **312** and the second blade **314** in association with the stem portion **306** and the coupling member **302** forms a substantially Y-shaped configuration. During rotation of the work implement **208** in a direction "**A**", the first blade **312** may be configured to provide a relatively more aggressive sweeping force in order to lift the material from the ground surface. Additionally, the second blade **314** may be configured to provide a drifting or pushing force to the lifted material present downstream of the first blade **312** in order to transfer the material into the storage compartment **108**.

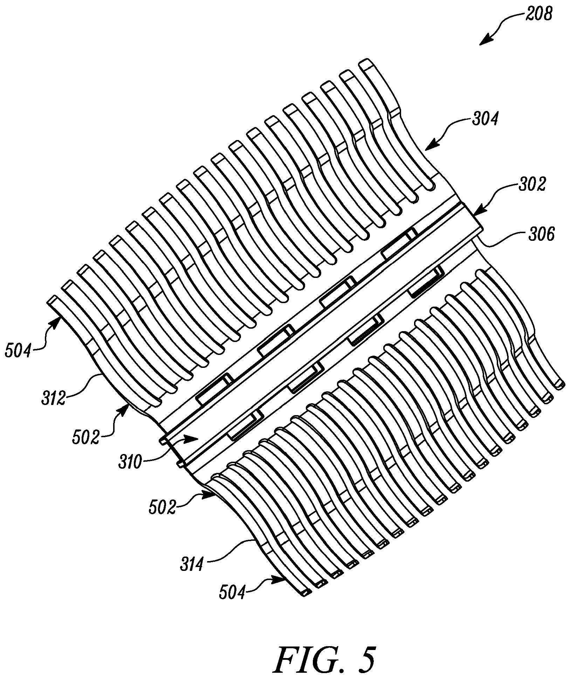

Referring to **FIG. 5**, a perspective view of another configuration of the work implement **208** is illustrated. Each of the first blade **312** and the second blade **314** includes a substantially flat and curved configuration. In the illustrated embodiment, the work implement **208** includes the single pair of blades **304**. In other embodiments, the work implement **208** may include the multiple pair of blades **304**, based on application requirements. Further, in some embodiments, each of the first blade **312** and the second blade **314** includes a first portion **502** and a second portion **504**. The first portion **502** may include a substantially rigid configuration. The second portion **504** may include a substantially flexible configuration, such as a brush-like configuration, a bristled configuration, and the like. The second portion **504** is coupled to the first portion **502** using any coupling mechanism (not shown), such as adhesion, interlocking elements, and the like.

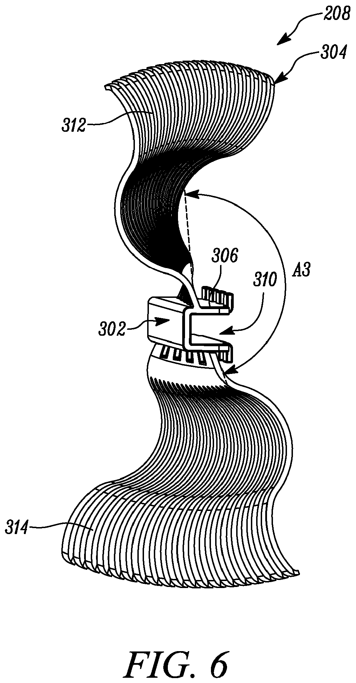

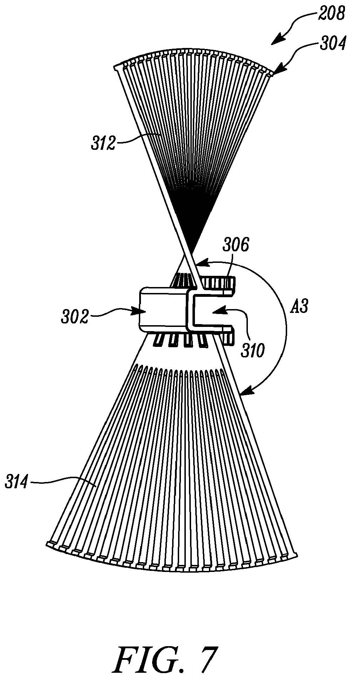

Referring to **FIG. 6**, a perspective view of another configuration of the work implement **208** is illustrated. Each of the first blade **312** and the second blade **314** includes a substantially curved and double helical configuration. In the illustrated embodiment, the work implement **208** includes the single pair of blades **304**. In other embodiments, the work implement **208** may include the multiple pair of blades **304**, based on application requirements. Referring to **FIG. 7**, a perspective view of another configuration of the work implement **208** is illustrated. Each of the first blade **312** and the second blade **314** includes a substantially angled and twisted configuration. In the illustrated embodiment, the work implement **208** includes the single pair of blades **304**. In other embodiments, the work implement **208** may include the multiple pair of blades **304**, based on application requirements.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Material Collection Equipment / Equipment
- **102**: Handle
- **104**: Gripping Portion
- **106**: Support Portion
- **108**: Storage Compartment
- **110**: Implement Compartment
- **112**: Pair of Wheels
- **202**: First Side Wall
- **204**: Second Side Wall
- **206**: Axle
- **208**: Work implement
- **302**: Coupling Member
- **304**: Pair of Blades
- **306**: Stem Portion
- **308**: Protrusion
- **310**: Recess
- **312**: First Blade
- **314**: Second Blade
- **315**: Leading edge of blade
- **317**: Trailing edge of blade
- **319**: Right-side end of axle
- **321**: Left-side end of axle
- **502**: First Portion
- **504**: Second Portion
- **A1**: Angle
- **A2**: Angle
- **A3**: Angle
- **A4**: Angle
- **A**: Direction
- **X-X'**: Axis
- **Y-Y'**: Axis

## Claims

1. A work implement **(208)** for an implement compartment **(110)** of a material collection equipment **(100),** the work implement **(208)** comprising:
a pair of wheels **(112)** adapted to propel the work implement **(208)** about an axis **(Y-Y');**
an axle **(206)** located within the implement compartment **(110)** and having a pair of ends **(319, 321)** coupled to the pair of wheels **(112);** and
at least one pair of blades **(304)** coupled to the axle **(206),** wherein each blade from the at least one pair of blades **(304)** is angularly offset from one another and includes:
a first blade **(312)** extending in a direction away from the axle **(206);** and
a second blade **(314)** extending in a direction away from the axle **(206)** and being at an angular offset with respect to the first blade **(312);**
the second blade is disposed in a side-by-side relation with respect to the first blade **(312),** wherein the second blade **(314)** is disposed adjacent to the first blade **(312);**
**characterized in that**:
each blade from at least one of the first blade **(312)** and the second blade **(314)** from the at least one pair of blades **(304)** includes a leading edge **(315)** and a trailing edge **(317),**
wherein the leading edge **(315)** of at least one of the first blade (312) is disposed proximal to an end **(319)** of the axle **(206)** and the leading edge (315) of the at least one of the second blades 314 is disposed proximal to an opposite end (321) of the axle (206).

2. The work implement **(208)** of claim 1, wherein the at least one pair of blades has a Y-shaped configuration.

3. The work implement **(208)** of claim 2, wherein each of the first blade **(312)** and the second blade **(314)** from the at least one pair of blade **(304)** define a substantially double helical configuration.

4. The work implement **(208)** of claim 1, wherein each of the first blade **(312)** and the second blade **(314)** from the at least one pair of blades **(304)** define a substantially flat and planar configuration.

5. The work implement **(208)** of claim 1, wherein each of the first blade **(312)** and the second blade **(314)** from the at least one pair of blades **(304)** define a substantially curved configuration.

6. The work implement **(208)** of claim 1, wherein each of the first blade **(312)** and the second blade **(314)** from each pair of blades **(304)** define a substantially angled configuration.

7. The work implement **(208)** of claim 1, wherein each of the first blade **(312)** and the second blade **(314)** includes a first portion and a second portion coupled to the first portion.

8. The work implement **(208)** of claim 6, wherein the second portion includes a bristled configuration.

9. The work implement **(208)** of claim 1, wherein the first blade **(312)** and the second blade **(314)** are laterally offset to each other.

10. A material collection equipment **(100)** comprising:
an implement compartment **(110);** and
employing the work implement **(208)** of claim 1.

11. The material collection equipment **(100)** of claim 10, wherein the work implement **(208)** further includes a coupling member **(302)** coupled to the axle **(206)** and extending radially away from the axle **(206),** the coupling member **(302)** adapted to be coupled to the at least one pair of blades **(304).**

12. The material collection equipment **(100)** of claim 10, wherein the coupling member **(302)** in association with the at least one pair of blades **(304)** forms a substantially Y-Shaped configuration.

## Patentansprüche

1. Arbeitsgerät **(208)** für ein Gerätefach **(110)** einer Materialsammelausrüstung **(100),** wobei das Arbeitsgerät **(208)** umfasst:
ein Paar von Rädern **(112),** die geeignet sind, das Arbeitsgerät **(208)** um eine Achse **(Y-Y')** anzutreiben;
eine Achse **(206),** die sich innerhalb des Gerätefachs **(110)** befindet und ein Paar Enden **(319, 321)** aufweist, die mit dem Paar von Rädern **(112)** verbunden sind; und
mindestens ein Paar von Klingen **(304),** die mit der Achse **(206)** gekoppelt sind, wobei jede Klinge von dem mindestens einen Paar von Klingen **(304)** winkelmäßig gegeneinander versetzt ist und umfasst:
eine erste Klinge **(312),** die sich in einer Richtung weg von der Achse **(206)** erstreckt; und
eine zweite Klinge **(314),** die sich in einer Richtung weg von der Achse **(206)** erstreckt und in Bezug auf die erste Klinge **(312)** winkelversetzt ist;
die zweite Klinge in Bezug auf die erste Klinge **(312)** Seite an Seite angeordnet ist, wobei die zweite Klinge **(314)** benachbart zu der ersten Klinge **(312)** angeordnet ist;
**dadurch gekennzeichnet, dass**:
jede Klinge von mindestens einer von der ersten Klinge **(312)** und der zweiten Klinge **(314)** von dem mindestens einen Paar von Klingen **(304)** eine Vorderkante **(315)** und eine Hinterkante **(317)** umfasst,
wobei die Vorderkante **(315)** von mindestens einer der ersten Klingen **(312)** proximal zu einem Ende **(319)** der Achse **(206)** angeordnet ist und die Vorderkante **(315)** von mindestens einer der zweiten Klingen **(314)** nahe einem gegenüberliegenden Ende **(321)** der Achse **(206)** angeordnet ist.

2. Arbeitsgerät **(208)** nach Anspruch 1, wobei das mindestens eine Paar von Klingen eine Y-förmige Konfiguration aufweist.

3. Arbeitsgerät **(208)** nach Anspruch 2, wobei sowohl die erste Klinge **(312)** als auch die zweite Klinge **(314)** des mindestens einen Paares von Klingen **(304)** eine im Wesentlichen doppelwendelförmige Konfiguration definieren.

4. Arbeitsgerät **(208)** nach Anspruch 1, wobei sowohl die erste Klinge **(312)** als auch die zweite Klinge **(314)** des mindestens einen Paares von Klingen **(304)** eine im Wesentlichen flache und ebene Konfiguration definieren.

5. Arbeitsgerät **(208)** nach Anspruch 1, wobei sowohl die erste Klinge **(312)** als auch die zweite Klinge **(314)** des mindestens einen Paares von Klingen **(304)** eine im Wesentlichen gekrümmte Konfiguration definieren.

6. Arbeitsgerät **(208)** nach Anspruch 1, wobei sowohl die erste Klinge **(312)** als auch die zweite Klinge **(314)** von jedem Paar von Klingen **(304)** eine im Wesentlichen abgewinkelte Konfiguration definieren.

7. Arbeitsgerät **(208)** nach Anspruch 1, wobei sowohl die erste Klinge **(312)** als auch die zweite Klinge **(314)** einen ersten Abschnitt und einen zweiten Abschnitt umfassen, der mit dem ersten Abschnitt gekoppelt ist.

8. Arbeitsgerät **(208)** nach Anspruch 6, wobei der zweite Abschnitt eine Borstenkonfiguration umfasst.

9. Arbeitsgerät **(208)** nach Anspruch 1, wobei die erste Klinge **(312)** und die zweite Klinge **(314)** seitlich zueinander versetzt sind.

10. Materialsammelausrüstung **(100),** umfassend:
ein Gerätefach **(110);** und
Verwenden des Arbeitsgeräts **(208)** nach Anspruch 1.

11. Materialsammelausrüstung **(100)** nach Anspruch 10, wobei das Arbeitsgerät **(208)** ferner ein Kopplungselement **(302)** umfasst, das mit der Achse **(206)** gekoppelt ist und sich radial von der Achse **(206)** weg erstreckt, wobei das Kopplungselement **(302)** angepasst ist, um mit dem mindestens einen Paar von Klingen **(304)** gekoppelt zu werden.

12. Materialsammelausrüstung **(100)** nach Anspruch 10, wobei das Kupplungselement **(302)** in Verbindung mit dem mindestens einen Paar von Klingen **(304)** eine im Wesentlichen Y-förmige Konfiguration bildet.

## Revendications

1. Outil de travail **(208)** pour un compartiment à outil **(110)** d'un équipement de collecte de matériaux **(100),** l'outil de travail **(208)** comprenant :
une paire de roues **(112)** adaptées pour propulser l'outil de travail **(208)** autour d'un axe **(Y-Y')** ;
un essieu **(206)** situé à l'intérieur du compartiment de l'outil **(110)** et ayant une paire d'extrémités **(319, 321**) couplées à la paire de roues **(112)** ; et
au moins une paire de lames **(304)** couplées à l'essieu **(206),** dans lequel chaque lame de l'au moins une paire de lames **(304)** est décalée angulairement par rapport à l'autre et comprend :
une première lame **(312)** s'étendant dans une direction s'éloignant de l'essieu **(206)** ; et
une seconde lame **(314)** s'étendant dans une direction s'éloignant de l'essieu **(206)** et
étant à un décalage angulaire par rapport à la première lame **(312)** ;
la seconde lame est disposée dans une relation côte à côte par rapport à la première lame **(312),** dans lequel la seconde lame **(314)** est disposée de manière adjacente à la première lame **(312)** ;
**caractérisé en ce que** :
chaque lame d'au moins l'une de la première lame **(312)** et de la seconde lame **(314)** de l'au moins une paire de lames **(304)** comprend un bord d'attaque **(315)** et un bord de fuite (**317**),
dans lequel le bord d'attaque **(315)** d'au moins une des premières lames **(312)** est disposé à proximité d'une extrémité **(319)** de l'essieu **(206)** et le bord d'attaque **(315)** d'au moins une des secondes lames **(314)** est disposé à proximité d'une extrémité opposée **(321)** de l'essieu **(206).**

2. Outil de travail **(208)** selon la revendication 1, dans lequel l'au moins une paire de lames a une configuration en forme de Y.

3. Outil de travail **(208)** selon la revendication 2, dans lequel chacune de la première lame **(312)** et de la seconde lame **(314)** de l'au moins une paire de lames **(304)** définit une configuration sensiblement en double hélice.

4. Outil de travail **(208)** selon la revendication 1, dans lequel chacune de la première lame **(312)** et de la seconde lame **(314)** de l'au moins une paire de lames **(304)** définit une configuration sensiblement plate et plane.

5. Outil de travail **(208)** selon la revendication 1, dans lequel chacune de la première lame **(312)** et de la seconde lame **(314)** de l'au moins une paire de lames **(304)** définit une configuration sensiblement incurvée.

6. Outil de travail **(208)** selon la revendication 1, dans lequel chacune de la première lame **(312)** et de la seconde lame **(314)** de chaque paire de lames **(304)** définit une configuration sensiblement angulaire.

7. Outil de travail **(208)** selon la revendication 1, dans lequel chacune de la première lame **(312)** et de la seconde lame **(314)** comprend une première partie et une seconde partie couplée à la première partie.

8. Outil de travail **(208)** selon la revendication 6, dans lequel la seconde partie comprend une configuration à crins.

9. Outil de travail **(208)** selon la revendication 1, dans lequel la première lame **(312)** et la seconde lame **(314)** sont décalées latéralement l'une par rapport à l'autre.

10. Équipement de collecte de matériaux **(100)** comprenant :
un compartiment à outil **(110)** ; et
employant l'outil de travail **(208)** selon la revendication 1.

11. Équipement de collecte de matériaux **(100)** selon la revendication 10, dans lequel l'outil de travail **(208)** comprend en outre un élément d'accouplement **(302)** couplé à l'essieu **(206)** et s'étendant radialement à l'écart de l'essieu **(206),** l'élément d'accouplement **(302)** étant adapté pour être couplé à l'au moins une paire de lames **(304).**

12. Équipement de collecte de matériaux **(100)** selon la revendication 10, dans lequel l'élément d'accouplement **(302)** en association avec l'au moins une paire de lames **(304)** forme une configuration sensiblement en forme de Y.
